Europäisches Patentamt

European Patent Office

Office européen des brevets

(19)

(11) Veröffentlichungsnummer: **0 054 902**
**B1**

(12) # EUROPÄISCHE PATENTSCHRIFT

(45) Veröffentlichungstag der Patentschrift:
**17.04.85**

(51) Int. Cl.⁴: **H 04 M 1/65**

(21) Anmeldenummer: **81110497.5**

(22) Anmeldetag: **16.12.81**

(54) Verfahren und Gerät zur automatischen Telefonanrufbeantwortung.

(30) Priorität: **19.12.80 DE 3047918**

(43) Veröffentlichungstag der Anmeldung:
**30.06.82 Patentblatt 82/26**

(45) Bekanntmachung des Hinweises auf die Patenterteilung:
**17.04.85 Patentblatt 85/16**

(84) Benannte Vertragsstaaten:
**AT BE CH DE FR GB IT LI NL SE**

(56) Entgegenhaltungen:
**DE - B - 1 280 949**
**US - A - 3 787 625**
**US - A - 4 032 712**

**Die Akte enthält technische Angaben, die nach dem Eingang der Anmeldung eingereicht wurden und die nicht in dieser Patentschrift enthalten sind.**

(73) Patentinhaber: **Compur-Electronic GmbH,
Steinerstrasse 15, D-8000 München 70 (DE)**

(72) Erfinder: **Bahle, Otto Georg, Dipl.-Ing.,
Waldpromenade 18b, D-8035 Gauting (DE)**

(74) Vertreter: **Geyer, Ulrich F., Dr. Dipl.-Phys.,
Steinerstrasse 15, D-8000 München 70 (DE)**

## Beschreibung

Die Erfindung betrifft ein Verfahren und eine Schaltungsanordnung zum selbständigen Umschalten vom Ansagetext-Wiedergabevorgang zum Informationsspeichervorgang in einem Gerät zur automatischen Telefonanrufbeantwortung, das ein Ansagewerk mit einem Ansageband, ein Speicherwerk mit einem Speicherband zum Aufzeichnen der ankommenden Gespräche sowie einen modulationsgesteuerten Schalter zur Erkennung des Endes eines Ansagetextes aufweist.

Eine Schaltungsanordnung dieser Art ist aus der BE-B-1 280 949 bekannt. Diese Schaltung weist jedoch den Nachteil auf, daß die Umschaltung auch dann erfolgt, wenn im Ansagetext zufälligerweise eine Sprachpause auftritt, so daß die Umschaltung des Geräts in den Informationsspeichervorgang mitten in den Mitteilungstext, also früher als beabsichtigt erfolgt. Wenn auf dem Ansageband nach einer bereits aufgesprochenen Mitteilung eine neue Mitteilung aufgesprochen wird, die kürzer als die zuvor aufgesprochene Mitteilung ist, wird die bekannte Schaltungsanordnung auch nach Ende der neu aufgesprochenen Mitteilung nicht umschalten, da danach weitere Signale vorhanden sind und diese erst dem Anrufer fälschlicherweise übermittelt werden. Schließlich können auch sonstige Stör- oder Rauschsignale oder sonstige nach Ende des Ansagetextes vorhandene Aufzeichnungen dazu führen, daß der modulationsgesteuerte Schalter nach Ende des eigentlichen Ansagetextes nicht schaltet und dadurch auch die Umschaltung in den Aufzeichnungsvorgang nicht bzw. nicht rechtzeitig erfolgt. Die bekannte Schaltungsanordnung kann also eine Fehlfunktion bei der Umschaltung vom Mitteilungsvorgang in den Informationsaufzeichnungsvorgang nicht verhindern.

Aus der US-A-4 032 712 ist ein Nur-Ansagegerät bekannt, mit dem vermieden werden soll, daß nach der Wiedergabe eines über einen alten, längeren Ansagetext aufgesprochenen neuen, kürzeren Ansagetextes Teile des alten, längeren Ansagetextes zusätzlich wiedergegeben werden. Dies wird bei diesem bekannten Nur-Anrufbeantworter ohne Anrufer-Aufzeichnungsmöglichkeit dadurch bewirkt, daß nach Aufzeichnung des Ansagetextes auf dem Aufzeichnungsband das Band eine bestimmte Zeitdauer lang weiterläuft, so daß in diesem bestimmten Zeitraum keine Sprachsignale mehr auf dem Ansageband sind. Bei der Wiedergabe wird dann das Gerät nach einer kürzeren Zeit als dieser bestimmte Zeitraum abgeschaltet, so daß nach Ende des Ansagetextes keine Information mehr übermittelt wird, die gegebenenfalls noch auf dem Ansageband ist.

Aus der DE-B-2 205 919 ist eine Schaltungsanordnung für einen Telefonanrufbeantworter mit Aufzeichnungsmöglichkeit für ankommende Gespräche bekannt, bei dem zur definitiven und sicheren Umschaltung vom Ansagetext-Wiedergabevorgang in den Informationsspeichervorgang ein Umschaltsteuersignal erzeugt wird, das nach dem Melde- und Mitteilungstext auf das Ansageband aufgezeichnet wird. Dieses Umschaltsteuersignal muß sich von den Sprachsignalen unterscheiden. Bei einem Anruf wird das Ansageband abgespielt und das Umschaltsteuersignal mit einer speziell dafür vorgesehenen Detektorschaltung ermittelt. In Abhängigkeit von der Ermittlung des Umschaltsteuersignals wird dann die selbständige Umschaltung vom Ansagetext-Wiedergabevorgang zum Informationsspeichervorgang vorgenommen. Bei der bekannten Schaltung ist der Schaltungsaufwand zur Erzeugung eines Umschaltsteuersignals und zur Feststellung des Umschaltsteuersignals beim Abspielen relativ hoch, da ein Signalgenerator für die Erzeugung eines bestimmten Umschaltsteuersignals und Filter zur Ermittlung des Umschaltsteuersignals beim Abspielen erforderlich sind. Darüber hinaus muß auf eine konstante Bandgeschwindigkeit bei Aufzeichnung und Abspielen des Umschaltsteuersignals Wert gelegt werden, da es bei der Erkennung des Umschaltsteuersignals auf die Frequenz ankommt.

Die Erkennung des Umschaltsteuersignals ist daher nicht sicher bzw. die Schaltungsstufen, beispielsweise die Filter dürfen nur einen geringen Toleranzbereich besitzen.

Der Erfindung liegt daher die Aufgabe zugrunde, ein Verfahren und eine Schaltungsanordnung der eingangs genannten Art zu schaffen, mit der die selbständige Umschaltung vom Ansagetext-Wiedergabevorgang zum Informationsspeichervorgang mit einfachen Mitteln und dennoch sehr sicher durchgeführt werden kann, ohne daß auf eine konstante bzw. definierte Bandgeschwindigkeit Wert gelegt zu werden braucht.

Diese Aufgabe wird bei dem erfindungsgemäßen Verfahren dadurch gelöst, daß auf dem Ansageband nach dem Melde- und Mitteilungstext und vor dem Schlußansagetext eine erste Lücke definierter Länge, beispielsweise durch Löschen des Bandes, freigehalten wird, das Ansageband beim Einschalten des Geräts und/oder Einlegen des Ansagebandes automatisch abgespielt, dabei die Lücke definierter Länge mit einem Sprachdetektor bestimmt und der Beginn der Lücke gespeichert wird, beim Ansagetext-Wiedergabevorgang nach einem Anruf ein Vergleich zwischen dem Ablauf des Ansagebandes und dem gespeicherten Beginn der ersten Lücke durchgeführt wird, und bei Übereinstimmung die Umschaltung auf den Informationsspeichervorgang erfolgt.

Eine Schaltungsanordnung, die die gestellte Aufgabe löst, ist gekennzeichnet durch ein Ansageband, das nach dem Melde- und Mitteilungstext und vor dem Schlußansagetext eine erste Lücke definierter Länge aufweist, einen Sprachdetektor, der bei Einschalten des Geräts und/oder Einlegen des Ansagebandes und gleichzeitigem automatischen Abspielen des Ansagebandes die erste Lücke definierter Länge und deren Beginn feststellt, einen Speicher, der den Beginn der ersten Lücke speichert, und einen Vergleicher, der beim Ansagetext-Wiedergabevorgang nach einem Anruf einen Vergleich zwischen dem Ablauf des Ansagebandes und dem gespeicherten Beginn der ersten Lücke ausführt, und der bei Übereinstimmung ein Ausgangssignal zum automatischen Umschalten auf den Informationsspeichervorgang erzeugt.

Bei dem erfindungsgemäßen Verfahren und der erfindungsgemäßen Schaltungsanordnung wird als Umschaltparameter eine definierte Lükke bzw. die Lage einer definierten Lücke auf dem Ansageband herangezogen, die in einfacher Weise abgefragt werden kann. Dadurch erfolgt eine sehr sichere Umschaltung, ohne daß auf die Bandgeschwindigkeit Wert gelegt zu werden braucht. Darüber hinaus sind bei dem erfindungsgemäßen Verfahren und der erfindungsgemäßen Vorrichtung keine besonderen Schaltungsteile zur Erzeugung von Umschaltsteuersignalen und keine Schaltungsteile, wie Filter usw. zur Feststellung des Umschaltsteuersignals bei Abspielen des Ansagebandes erforderlich, so daß der Schaltungsaufwand wesentlich verringert ist.

Die amtlichen Stellen fordern bei Telefonanrufbeantwortern, daß das Ansageband bei Einlegen oder Auswechseln der Ansagekassette und bei Einschalten des Anrufbeantworters automatisch auf seinen Speicherinhalt geprüft wird, d. h. das Ansageband wird bei Einschalten des Anrufbeantworters oder bei Einsetzen bzw. Auswechseln der Ansagekassette automatisch abgespielt. Während dieses Vorgangs kann der Beginn der ersten Lücke auf einfache Weise ermittelt werden. Um sicher zu stellen, daß es sich auch tatsächlich um die erste Lücke, und nicht um eine willkürliche Lücke während des Melde- und Mitteilungstextes handelt, weist die erste Lücke eine definierte Länge, beispielsweise 4 Sekunden auf. Lücken solcher Länge sind gemäß Postvorschriften nicht zulässig. Wenn beim Abspielen des Ansagebandes also eine Lücke mit der definierten Länge auftritt, wird der Beginn dieser Lücke gespeichert.

Nachdem der Telefonanrufbeantworter in den betriebsbereiten Zustand gebracht ist und ein Anruf kommt, wird das Ansageband zur Wiedergabe des Ansagetextes abgespielt. Während dieses Vorgangs wird der Ansagetext mit dem gespeicherten Beginn der ersten Lücke verglichen, und wenn dabei Übereinstimmung festgestellt wird, wird ein Umschaltsignal erzeugt, das zum Speicherwerk geführt wird und dieses zum Speichern des ankommenden Gesprächs in Funktion setzt.

Gemäß einer bevorzugten Ausführungsform des erfindungsgemäßen Verfahrens weist das Ansageband nach der ersten Lücke mit definierter Länge einen den Schlußansagetext umfassenden Sprachblock definierter Länge auf. Diese definierte Länge des den Schlußansagetext umfassenden Sprachblocks wird dazu ausgenutzt, mit noch größerer Sicherheit die erste Lücke definitiv zu erkennen, denn es könnte die Möglichkeit eintreten, daß eine willkürliche, nicht zulässige Lücke im Melde- und Mitteilungstext ebenfalls die Länge der ersten Lücke aufweist. Durch die definierte Länge des den Schlußansagetext umfassenden Sprachblock ist eine noch sichere Auffindung der ersten Lücke und damit des Beginns der ersten Lücke bzw. des Endes des Melde- und Mitteilungstextes möglich.

Um die Sicherheit der Auffindung des Endes des Melde- und Mitteilungstextes bzw. des Beginns der zweiten Lücke noch weiter zu erhöhen, kann gemäß einer weiteren Ausführungsform der Erfindung nach dem den Schlußansagetext umfassenden Sprachblocks eine zweite Lücke mit definierter Länge auf dem Ansageband vorgesehen sein.

Der Beginn der ersten Lücke wird gemäß einer bevorzugten Ausführungsform durch eine Zeitmessung ermittelt, und eine Zeitangabe gespeichert. Diese gespeicherte Zeitangabe wird dann beim Abspielen des Ansagetextes zeitlich verglichen. Bei der erfindungsgemäßen Schaltungsanordnung ist daher eine Zeitmeßeinrichtung zur zeitlichen Ermittlung des Beginns der ersten Lücke vorgesehen.

Gemäß einer alternativen Ausführungsform des erfindungsgemäßen Verfahrens wird der Beginn der ersten Lücke mittels einer Bandlängenmessung ermittelt und die den Beginn der ersten Lücke entsprechende Bandlänge wird dann gespeichert. Bei der erfindungsgemäßen Schaltungsanordnung ist dazu ein Bandlängenzähler vorgesehen, der ohnehin aufgrund postalischer Forderungen (Überwachung von Bandriß und Bandblockade) vorhanden sein muß.

Aufgrund der Bandlängenzählung ist man völlig unabhängig von der Bandgeschwindigkeit.

Gemäß einer weiteren bevorzugten Ausführungsform der Erfindung wird die ermittelte Bandlänge bzw. der Zählerstand für den Beginn der ersten Lücke oder das Zeitmaß bei Auftreten des Beginns der ersten Lücke nach dem Ansagetext bzw. nach der eine definierte Länge aufweisenden zweiten Bandlücke auf dem Ansageband aufgezeichnet. Beim Abspielvorgang des Ansagebandes, der ohnehin beim Einschalten des Geräts bzw. beim Auswechseln oder Einsetzen der Ansagekassette gefordert wird, kann dann diese Aufzeichnung wiedergewonnen werden.

Die Erfindung wird nachstehend anhand der Zeichnungen beispielsweise näher erläutert. Es zeigt

Fig. 1 die schematische Darstellung eines Ansagetextes mit definierten Lücken auf dem Ansageband und

Fig. 2 ein Ausführungsbeispiel für eine Schaltungsanordnung gemäß der vorliegenden Erfindung.

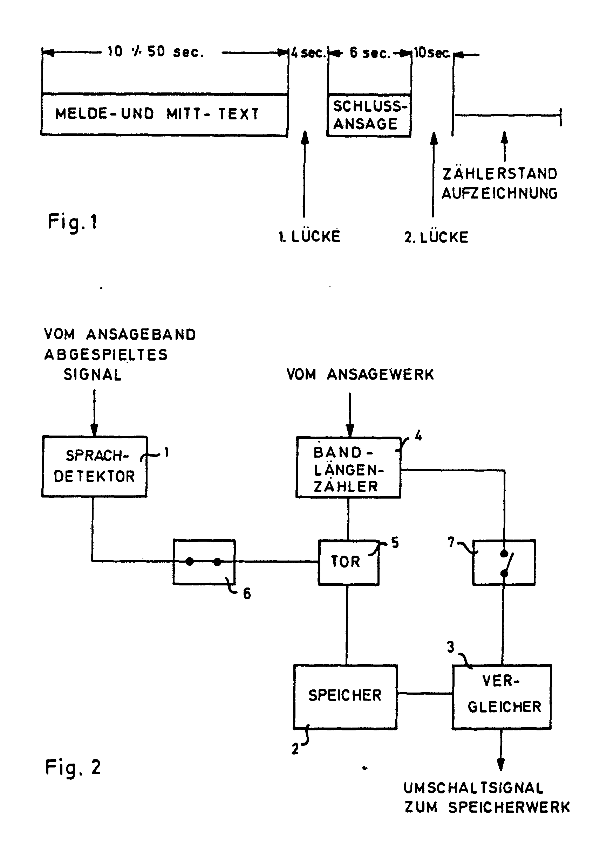

Wie Fig. 1 zeigt, beginnt der Ansagetext auf dem Ansageband mit einem Melde- und Mitteilungstext in einer Länge von beispielsweise 10 bis 50 Sekunden. Danach folgt eine erste Lücke mit einer definierten Länge, beispielsweise mit 4 Sekunden. An die erste Lücke schließt sich der den Schlußansagetext umfassende Sprachblock definierter Länge, beispielsweise mit einer Länge von max. 6 Sekunden an. Diesem den Schlußansagetext umfassenden Sprachblock definierter Länge folgt eine zweite Lücke mit definierter Länge, beispielsweise mit einer Länge von 10 Sekunden. Schließlich kann nach der zweiten Lücke eine Aufzeichnung des Zählerstands für den Beginn der ersten Lücke erfolgen.

In Fig. 2 ist ein Ausführungsbeispiel für die erfindungsgemäße Schaltungsanordnung schematisch dargestellt.

Wenn das Ansageband bei einer Kontrollwiedergabe des Ansagetextes abgespielt wird, — gemäß den Postbestimmungen nämlich immer dann, wenn der Telefonanrufbeantworter eingeschaltet oder ein Ansageband eingelegt bzw. ausgewechselt wird —, gelangt das mittels eines nicht dargestellten Magnetkopfes vom Ansageband abgespielte Signal zu einem Sprachdetektor 1. Der Sprachdetektor 1 erzeugt dann ein das Tor 5 in den leitenden Zustand versetzendes Ausgangssignal, wenn der Sprachdetektor 1 den Beginn der ersten Lücke feststellt. Während der Kontrollabspielung des Ansagebandes befindet sich ein zwischen den Sprachdetektor 1 und dem Tor 5 liegender Schalter 6 in leitendem Zustand. Gleichzeitig zählt der Bandlängenzähler 4 die Bandlänge des Ansagebandes. Dazu steht der Bandlängenzähler 4 mit dem Ansagewerk in Verbindung. Wenn das Tor 5 durchgeschaltet wird, also wenn der Sprachdetektor 1 den Beginn der ersten Lücke feststellt, gelangt der Zählerstand des Bandlängenzählers 4 zum Speicher 2, in dem dieser Zählerstand, d. h. also der Zählerstand des Ansagebandes bei Beginn der ersten Lücke gespeichert wird. In Zusammenhang mit dem Sprachdetektor 1 kann eine (nicht dargestellte) Schaltungsstufe vorgesehen sein, die sicherstellt, daß nur dann der Zählerstand des Bandlängenzählers 4 im Speicher 2 gespeichert wird, wenn es sich auch tatsächlich um den Beginn der ersten Lücke und nicht um den Beginn irgend einer willkürlichen Lücke im Melde- und Mitteilungstext oder um eine sonstige Lücke handelt. Zu diesem Zwecke wird das Ansageband ganz abgespielt und anhand der definiert langen Lücken bzw. des den Schlußansagetext umfassenden Sprachblocks verifiziert und sichergestellt, daß nur bei Beginn der ersten Lücke das Tor 5 in den leitenden Zustand versetzt wird.

Nach Abschluß der von der Post geforderten Kontrollwiedergabe des Ansagetextes ist der den Beginn der ersten Lücke entsprechende Zählerstand im Speicher 2 gespeichert. Wenn gemäß einer anderen Ausführungsform der den Beginn der ersten Lücke entsprechende Zählerstand auf dem Ansageband aufgezeichnet wurde, wird dieser Zählerstand bei der Kontrollwiedergabe in den Speicher 2 gebracht.

Wenn im betriebsbereiten Zustand des Telefonanrufbeantworters nun ein Anruf erfolgt, wird das Ansageband abgespielt und der Melde- und Mitteilungstext über die Telefonleitung abgegeben. Gleichzeitig zählt der Bandlängenzähler 4 die augenblickliche Länge des Ansagebandes, die bei geschlossenem Schalter 7 (der sich bei der Kontrollwiedergabe des Ansagebandes im nichtleitenden Zustand befindet) in einen Vergleicher 3 gelangt und die mit dem den Beginn der ersten Lücke entsprechenden Zählerstand verglichen wird, der im Speicher 2 gespeichert ist. Bei einer Übereinstimmung des augenblicklichen Zählerstands des Bandlängenzählers 4 mit dem den Beginn der ersten Bandlücke entsprechenden Zählerstand des Speichers 2, d. h., wenn der Beginn der ersten Lücke während des Abspielens des Ansagebandes bei einem Telefonanruf erreicht ist, gibt der Vergleicher 3 ein Umschaltsignal ab, das zum Speicherwerk gelangt und dieses in Funktion setzt. Dadurch wird die vom Anrufer über die Fernsprechleitung kommende Gesprächsinformation auf dem Speicherband aufgezeichnet.

Um dem Anrufer einen Hinweis zu geben, daß er mit dem Aufsprechen beginnen kann, besteht die Möglichkeit, mittels eines Generators ein Torsignal zu erzeugen. Dies ist jedoch nicht unbedingt erforderlich. In jedem Falle wird dieses zusätzliche Tonsignal jedoch nicht aufgezeichnet oder zur Umschaltung vom Ansagetext-Wiedergabevorgang zum Informationsspeichervorgang verwendet.

Statt des Bandlängenzählers 4 kann gemäß einer alternativen Ausführungsform auch eine Zeitmeßeinrichtung vorgesehen sein. Am erfindungsgemäßen Verfahren und der Funktion der erfindungsgemäßen Schaltung ändert sich dadurch jedoch nichts.

Das Verfahren und die Schaltungsanordnung gemäß der vorliegenden Erfindung wurde anhand eines bevorzugten Ausführungsbeispiels beschrieben. Dem Fachmann sind jedoch zahlreiche Abwandlungen und Ausgestaltungen bekannt, ohne daß dadurch der in den Patentansprüchen angegebene Umfang verlassen wird.

**Patentansprüche**

1. Verfahren zum selbständigen Umschalten vom Ansagetext-Wiedergabevorgang zum Informationsspeichervorgang in einem Gerät zur automatischen Telefonanrufbeantwortung, das ein Ansagewerk mit einem Ansageband, ein Speicherwerk mit einem Speicherband zum Aufzeichnen der ankommenden Gespräche sowie einem modulationsgesteuerten Schalter zur Erkennung des Endes eines Ansagetextes aufweist, dadurch gekennzeichnet, daß

— auf dem Ansageband nach dem Melde- und Mitteilungstext und vor dem Schlußansagetext eine erste Lücke definierter Länge freigehalten wird,

— das Ansageband beim Einschalten des Geräts und/oder Einlegen des Ansagebandes automatisch abgespielt, dabei die Lücke definierter Länge mit einem Sprachdetektor bestimmt und der Beginn der Lücke gespeichert wird,

—  beim Ansagetext-Wiedergabevorgang nach einem Anruf ein Vergleich zwischen dem Ablauf des Ansagebandes und dem gespeicherten Beginn der ersten Lücke durchgeführt wird, und

—  bei Übereinstimmung die Umschaltung auf den Informationsspeichervorgang erfolgt.

2. Verfahren nach Anspruch 1, dadurch gekennzeichnet, daß auf dem Ansageband nach der ersten Lücke ein den Schlußansagetext umfassender Sprachblock definierter Länge aufgezeichnet wird.

3. Verfahren nach Anspruch 1 und 2, dadurch gekennzeichnet, daß auf dem Ansageband nach dem den Schlußansagetext umfassenden Sprachblock eine zweite Lücke definierter Länge freigehalten wird.

4. Verfahren nach Anspruch 1 oder 2, dadurch gekennzeichnet, daß der Beginn der ersten Lücke nach dem Schlußansagetext auf dem Ansageband aufgezeichnet wird.

5. Verfahren nach Anspruch 3, dadurch gekennzeichnet, daß der Beginn der ersten Lücke nach der zweiten Lücke auf dem Ansageband aufgezeichnet wird.

6. Verfahren nach einem der Ansprüche 1 bis 5, dadurch gekennzeichnet, daß der Beginn der ersten Lücke durch eine Zeitmessung ermittelt, dieser Beginn der ersten Lücke als Zeitangabe gespeichert und ein zeitlicher Vergleich durchgeführt wird.

7. Verfahren nach einem der Ansprüche 1 bis 5, dadurch gekennzeichnet, daß der Beginn der ersten Lücke durch eine Bandlängenmessung ermittelt, dieser Beginn der ersten Lücke in Form einer Bandlängenangabe gespeichert und ein Bandlängenvergleich durchgeführt wird.

8. Schaltungsanordnung zum selbsttätigen Umschalten von Ansagetext-Wiedergabevorgang zum Informationsspeichervorgang in einem Gerät zur automatischen Telefonanrufbeantwortung, das ein Ansagewerk mit einem Ansageband, ein Speicherwerk mit einem Speicherband zum Aufzeichnen der ankommenden Gespräche sowie einem modulationsgesteuerten Schalter zur Erkennung des Endes eines Ansagetextes aufweist, gekennzeichnet durch

—  ein Ansageband, das nach dem Melde- und Mitteilungstext und vor dem Schlußansagetext eine erste Lücke definierter Länge aufweist,

—  einen Sprachdetektor (1), der bei Einschalten des Geräts und/oder Einlegen des Ansagebandes und gleichzeitigen automatischen Abspielen des Ansagebandes die erste Lücke definierter Länge und deren Beginn feststellt,

—  einen Speicher (2), der den Beginn der ersten Lücke speichert, und

—  einen Vergleicher (3), der beim Ansagetext-Wiedergabevorgang nach einem Anruf einen Vergleich zwischen dem Ablauf des Ansagebandes und dem gespeicherten Beginn der ersten Lücke ausführt, und der bei Übereinstimmung ein Ausgangssignal zum automatischen Umschalten auf den Informationsspeichervorgang erzeugt.

9. Schaltungsanordnung nach Anspruch 8, dadurch gekennzeichnet, daß ein Bandlängenzähler (4) vorgesehen ist, der den Beginn der ersten Lücke in Form einer Bandlängenzählung feststellt.

10. Schaltungsanordnung nach Anspruch 8, dadurch gekennzeichnet, daß eine Zeitmeßeinrichtung vorgesehen ist, die den Beginn der ersten Lücke in Form einer Zeitangabe feststellt.

**Claims**

1. A method of automatically switching-over from the announcement text play-back operation to the information storage operation in an apparatus for automatically answering telephone calls, which apparatus has an announcement mechanism having an announcement tape, a storage mechanism having a storage tape for recording the incoming speech, and a modulation-controlled switch for detecting the end of an announcement text, characterised in that

—  a first gap of defined length is kept free on the announcement tape after the announcing and message text and before the concluding announcement text,

—  the announcement tape is automatically played back upon switching on the apparatus and/or loading the announcement tape, thus the gap of defined length is determined by a speech detector and the commencement of the gap is stored,

—  a comparison between the expiry of the announcement tape and the stored commencement of the first gap being made after a call during the play-back of the announcement text, and

—  switching-over to the information storage operation is effected upon coincidence.

2. A method as claimed in claim 1, characterised in that a speech block of defined length which includes the concluding announcement text is recorded on the announcement tape after the first gap.

3. A method as claimed in claim 1 and 2, characterised in that a second gap of defined length is kept free on the announcement tape after the speech block which includes the final announcement text.

4. A method as claimed in claim 1 or 2, characterised in that the commencement of the first gap after the final announcement text is recorded on the announcement tape.

5. A method as claimed in claim 3, characterised in that the commencement of the first gap is recorded on the announcement tape after the second gap.

6. A method as claimed in one of the claims 1 to 5, characterised in that the commendement of the first gap is ascertained by time measurement, this commencement of the first gap is stored as a time datum, and a comparison with respect to time is made.

7. A method as claimed in one of the claims 1 to 5, characterised in that the commencement of the first gap is ascertained by measuring the length of the tape, this commencement of the first gap is stored in the form of a tape length datum, and a comparison of the tape lengths is made.

8. A circuit arrangement for the automatic switching-over from the announcement text play-back operation to the information storage operation in an apparatus for automatically answering telephone calls, which apparatus has an announcement mechanism having an announcement tape, a storage mechanism having a storage tape for recording the incoming speech, and a modulation-controlled switch for detecting the end of an announcement text, characterised by

— an announcement tape which has a first gap of defined length after the announcing and message text and before the concluding announcement text,
— a speech detector (1) which detects the first gap of defined length and the commencement thereof upon switching on the apparatus and/or loading the announcement tape and simultaneous automatic playback of the announcement tape,
— a store (2) which stores the commencement of the first gap, and
— a comparator (3) which makes a comparison between the expiry of the announcement tape and the stored commencement of the first gap during play-back of the announcement text after a call, and which, upon coincidence, produces an output signal for automatically switching over to the information storage operation.

9. A circuit arrangement as claimed in claim 8, characterised in that there is provided a tape length counter (4) which detects the commencement of the first gap in the form of a tape length count.

10. A circuit arrangement as claimed in claim 8, characterised in that there is provided a time measuring device which detects the commencement of the first gap in the form of a time datum.

## Revendications

1. Procédé permettant le passage automatique du fonctionnement en écoute d'un texte d'annonce au fonctionnement en stockage d'informations, dans, un appareil de réponse automatique aux appels téléphoniques qui comprend un méchanisme d'annonce comportant une bande d'annonce, un mécanisme de stockage comportant une bande de stockage qui permet l'enregistrement des communications qui arrivent, ainsi qu'un circuit à commande par modulation qui permet de reconnaître la fin d'un texte d'annonce, caractérisé en ce que:

— une première lacune de longueur déterminée est maintenue libre sur la bande d'annonce, à la suite du texte de message et de communication et avant le texte de fin d'annonce,
— la bande d'annonce défile automatiquement lors de la mise en marche de l'appareil et/ou de la mise en place de cette bande d'annonce, la lacune de longueur déterminée étant alors repérée à l'aide d'un détecteur vocal et le début de cette lacune mis en mémoire.
— une comparaison est effectuée, lors du fonctionnement en écoute du texte d'annonce suivant un appel, entre le défilement de la bande d'annonce et le début de la première lacune qui a été mis en mémoire, et
— en cas d'accord, le passage en fonctionnement de stockage d'informations a lieu.

2. Procédé selon la revendication 1, caractérisé en ce que, sur la bande d'annonce et après la première lacune, se trouve enregistré un bloc vocal de longueur déterminée et englobant le texte de fin d'annonce.

3. Procédé selon les revendications 1 et 2, caractérisé en ce que, sur la bande d'annonce et après le bloc vocal englobant le texte de fin d'annonce, se trouve maintenue libre une deuxième lacune de longueur déterminée.

4. Procédé selon la revendication 1 ou 2, caractérisé en ce que le début de la première lacune est enregistré sur la bande d'annonce après le texte de fin d'annonce.

5. Procédé selon la revendication 3, caractérisé en ce que le début de la premièree lacune est enregistré sur la bande d'annonce après la deuxième lacune.

6. Procédé selon l'une quelconque des revendications 1 à 5, caractérisé en ce que le début de la première lacune est établi grâce à une mesure de temps, en ce que ce début de la première lacune est mis en mémoire sous forme d'une indication de durée et en ce qu'est exécutée une comparaison de durées.

7. Procédé selon l'une quelconque des revendications 1 à 5, caractérisé en ce que le début de la première lacune est établi grâce à une mesure de longueur de bande, en ce ce début de la première lacune est mis en mémoire sous la forme d'une indication de longueur de bande et en ce qu'est exécutée une comparaison de longueurs de bande.

8. Circuit permettant le passage automatique du fonctionnement en écoute de texte d'annonce au fonctionnement en stockage d'informations dans un appareil de réponse automatique aux appels téléphoniques qui comprend un mécanisme d'annonce comportant une bande d'annonce, un mécanisme de stockage comportant une bande de stockage qui permet l'enregistrement des communications qui arrivent, ainsi qu'un circuit à commande par modulation permettant de reconnaître la fin d'un texte d'annonce, caractérisé par:

— une bande d'annonce qui comprend, après le texte de message et de communication et avant le texte de fin d'annonce, une première lacune de longueur déterminée,
— un détecteur vocal (1) qui repère cette première lacune de longueur déterminée et son commencement, lors de la mise en marche de l'appareil et/ou la mise en place de la bande d'annonce et du défilement automatique simultané de cette bande,
— une mémoire (2) qui mémorise le début de la première lacune, et
— un comparateur (3) qui exécute, lors du fonctionnement en écoute du texte d'annonce suivant un appel, une comparaison entre le défilement de la bande d'annonce et le début mémorisé de la première lacune, et qui, en cas d'accord, produit un signal de sortie assurant le passage automatique au fonctionnement en stockage d'informations.

9. Circuit selon la revendication 8, caractérisé en ce qu'il est prévu un compteur de longueur de bande (4) qui repère le début de la première lacune sous forme d'une valeur de longueur de bande.

10. Circuit selon la revendication 8, caractérisé en ce qu'il est prévu un dispositif de mesure du temps qui repère le début de la première lacune sous forme d'une indication de durée.

Fig. 1

Fig. 2